# EUROPÄISCHE PATENTSCHRIFT

(11) **EP 3 579 383 B1**
(45) Veröffentlichungstag und Bekanntmachung des Hinweises auf die Patenterteilung: **23.12.2020**
(21) Anmeldenummer: 18176512.4
(22) Anmeldetag: 07.06.2018
(51) Int. Cl.: H02K 1/27, H01F 7/02, H01F 13/00

(54) **DREHMOMENTOPTIMIERTER MEHRPOLIGER ROTOR FÜR EINEN ELEKTROMOTOR**
TORQUE-OPTIMISED MULTIPOLAR ROTOR FOR AN ELECTRIC MOTOR
ROTOR MULTIPOLAIRE À COUPLE DE ROTATION OPTIMISÉ POUR UN MOTEUR ÉLECTRIQUE

(43) Veröffentlichungstag der Anmeldung: 11.12.2019
(73) Patentinhaber: maxon international ag, 6072 Sachseln (CH)
(72) Erfinder: Borg-Bartolo, James, 6060 Sarnen (CH)
(74) Vertreter: Grünecker Patent- und Rechtsanwälte PartG mbB

(56) Entgegenhaltungen:
- EP-A1- 2 696 469
- DE-A1- 19 723 302
- DE-A1-102012 218 980
- DE-A1-102013 202 006
- DE-A1-102013 212 616
- JP-A- 2003 045 734
- US-A1- 2015 303 751
- US-B1- 6 703 741

## Beschreibung

Die vorliegende Erfindung betrifft einen mehrpoligen Rotor für einen Elektromotor nach dem Oberbegriff des unabhängigen Anspruchs 1. Bei einem gattungsgemäßen Rotor sind mehrere Permanentmagneten über einen Umfang des Rotors verteilt angeordnet, wobei jeder Permanentmagnet eine erste Längsseite und eine der ersten Längsseite gegenüberliegende zweite Längsseite aufweist, wobei erste und zweite Längsseite jeweils einem benachbarten Permanentmagneten zugewandt sind, wobei zwischen erster und zweiter Längsseite eine in Bezug auf eine Achse des Rotors radial verlaufende Mittelebene des jeweiligen Permanentmagneten besteht, und wobei sich an der ersten Längsseite und an der zweiten Längsseite jeweils einer der beiden magnetischen Pole des Permanentmagneten befindet.

Mehrpolige Rotoren nach dem Oberbegriff des unabhängigen Anspruchs 1 sind aus dem Stand der Technik bekannt. Die Permanentmagneten sind zumeist in einen Rotorkörper eingebettet, der die Permanentmagneten trägt und gleichzeitig einen magnetischen Rückschluss für die Permanentmagneten darstellt. Zwischen jeweils zwei Permanentmagneten befindet sich jeweils ein magnetisches Sammlerelement des Rotorkörpers. Aufgrund der Polung der Permanentmagneten befinden sich die alternierenden Pole am Außenumfang des Rotors auf Position der Sammlerelemente. Rotoren dieser Bauart werden auch als Flusssammlerrotoren bezeichnet.

Die gattungsgemäße US 2015/303751 A1 befasst sich mit einem Rotor mit Permanentmagneten. Der Blechpaketkern weist sich abwechselnde Polsegmente und Magnetaussparungen auf. Der Kern ist mit einer Nabe versehen, die auf einer Welle aufsitzt. Die Nabe ist mit den Polsegmenten über dünne Stege verbunden. Des Weiteren sind dreiecksförmige Stege vorgesehen, die voraussichtlich die Permanentmagnete abstützen sollen. In einer Ausführungsform (Fig. 6 und 7) weisen die Permanentmagnete einen trapezförmigen Querschnitt auf, der sich zum Umfang hin verjüngt. Der Rotorkern wird in zwei Endringe eingebettet, die spritzgegossen sind und im Rotorkern vorhandene Öffnungen ausfüllen (siehe Fig. 8 und 9). Des Weiteren ist erwähnt, dass die magnetischen Feldvektoren senkrecht zu den radialen Seitenflächen der Permanentmagnete verlaufen und in Richtung des Luftspaltes weisen.

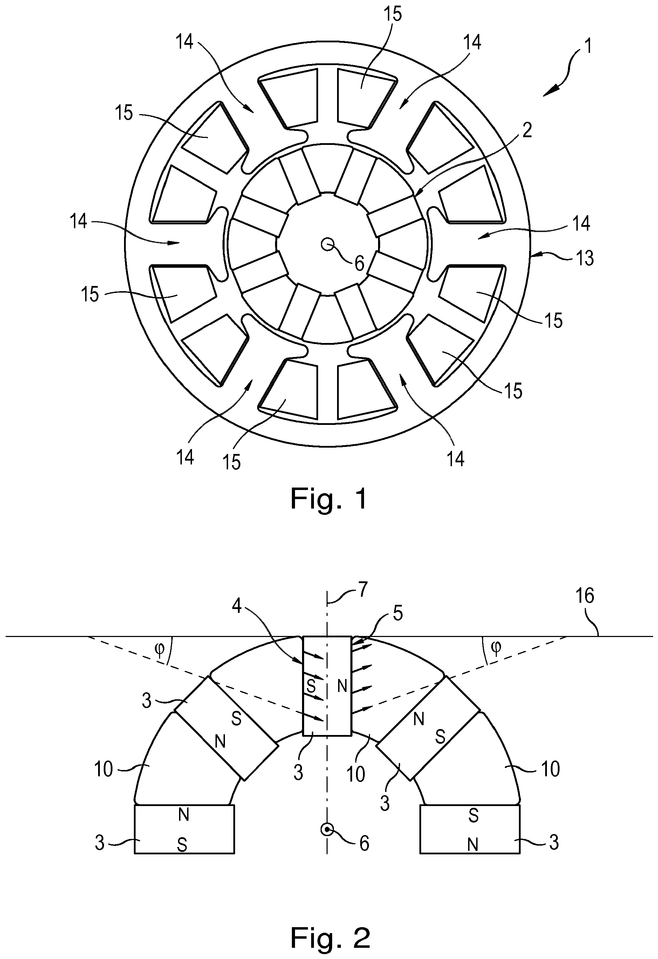

Die DE 197 23 302 A1 befasst sich mit einem Permanentmagnetsystem mit Reluktanzunterstützung für Läufer von elektrischen Maschinen. Anhand der Fig. 2 ist eine Variante erläutert, bei der die Permanentmagnete aus einem anisotropen Werkstoff aus zwei Einzelteilen zusammengesetzt sind. Die Einzelteile sind dabei so magnetisiert, dass die wirksamen Feldlinien in einem spitzeren Winkel als 90° zur jeweils zugehörigen Magnetoberfläche austreten. Die Einzelteile der Permanentmagnete werden in dem gewünschten Austrittswinkel zur Vorzugsrichtung schräg aus einem Rohling ausgeschnitten und in den Vorzugsrichtungen magnetisiert.

Die DE 10 2013 202006 A1 befasst sich mit einer Läuferanordnung für eine permanentmagneterregte elektrische Maschine. Jeder Permanentmagnet wird aus einem ersten und einem zweiten Abschnitt zusammengesetzt, wobei der zweite Abschnitt wiederum aus zwei Magnetisierungsbereichen besteht. Der erste Abschnitt weist eine herkömmliche geradlinige Magnetisierung auf. Im zweiten Abschnitt sind die zwei Magnetisierungsbereiche mit schrägen Magnetisierungsrichtungen mit einem Winkel α versehen, der im Bereich zwischen 30° und 60° liegen soll. Die Permanentmagnete sind in Taschen zwischen den Polschuhen angeordnet und nach innen von dem Haltebereich, der um die Welle angeordnet ist, abgestützt. Die Polschuhe sind über schmale Stege mit dem Haltebereich verbunden.

Die DE 10 2012 218980 A1 befasst sich ebenfalls mit einer Läuferanordnung für eine permanentmagneterregte elektrische Maschine. Der Rotor weist einen Rotorkörper auf, der mit Polschuhen versehen ist, die über Stege mit einem an der Welle angeordneten Rückschlussbereich verbunden sind. Die Permanentmagnete sind in Taschen eingesetzt und nach außen mittels Überstände gesichert. In einer Ausführungsform weisen die Permanentmagnete eine Halbach-Magnetisierung auf, so dass die Magnetisierung in einen ersten Abschnitt und einen zweiten Abschnitt unterteilt werden kann. Im ersten Abschnitt weisen die Permanentmagnete eine herkömmliche geradlinige Magnetisierung auf. Im zweiten Abschnitt erfolgt die Magnetisierung vom Halbach-Typ. Der Austrittswinkel der Feldlinien ist daher im zweiten Abschnitt unterschiedlich in Abhängigkeit der radialen Position an dem zweiten Abschnitt.

Die DE 2013 212616 A1 befasst sich mit einer elektrischen Maschine, die einen Rotor mit Permanentmagneten aufweist. Die Magnetelemente sind im Querschnitt trapezförmig und verjüngen sich nach außen. Die zugehörigen Rotorpole sind mittels Fortsätze und Verbindungen(Rotorring) miteinander verbunden. Die Magnetisierung erfolgt näherungsweise in Umfangsrichtung des Rotors. Alternativ wird eine radiale Polarisierung erwähnt. Bevorzugt weisen benachbarte Magnetelemente eine entgegengesetzte Richtung des Magnetflusses auf. Dadurch sind gleichartige Magnetpole von jeweils zwei benachbarten Magnetelementen gegeneinander gerichtet. Die Magnetflüsse zweier benachbarter Magnetelemente fließen so in den Rotorpolen aufeinander zu und bäumen sich radial auf. Der Magnetfluss tritt bevorzugt senkrecht aus den Rotorpolen am Polrand heraus.

Ein weiterer mehrpoliger Rotor mit eingebetteten Permanentmagneten ist aus JP 2003 045734 A bekannt. Die Permanentmagneten weisen eine Trapezform auf und bestehen aus zwei Teilen.

Weitere Rotoren sind beispielsweise aus DE 10 2013 218 829 A1, DE 11 2013 007 101 T5 und DE 100 84 941 T1 bekannt.

Es besteht zunehmender Bedarf an leistungsstarken Elektromotoren mit kompakter Bauweise. Aufgabe der vorliegenden Erfindung ist es daher, einen mehrpoligen Rotor der gattungsgemäßen Art anzugeben, der zu einer Erhöhung des Drehmoments des Elektromotors bei gleichzeitig kompakter Bauweise beiträgt.

Die Aufgabe wird gelöst durch die Merkmale des unabhängigen Anspruchs 1. Demnach liegt bei einem gattungsgemäßen mehrpoligen Rotor dann eine erfindungsgemäße Lösung der Aufgabe vor, wenn der Permanentmagnet derart magnetisiert ist, dass zwischen sowohl einem in den Permanentmagnet eintretenden magnetischen Flussvektor an der ersten Längsseite als auch einem aus dem Permanentmagnet austretenden magnetischen Flussvektor an der zweiten Längsseite einerseits und einer orthogonal zur Mittelebene des Permanentmagneten verlaufenden Tangente am Außenumfang des Rotors andererseits ein Winkel ϕ größer 0° besteht, wobei der in den Permanentmagnet eintretende magnetische Flussvektor an der ersten Längsseite eine in Bezug auf die Achse des Rotors radial zur Achse hin und von der Tangente weg gerichtete Komponente aufweist, und wobei der aus dem Permanentmagnet austretende magnetische Flussvektor an der zweiten Längsseite eine in Bezug auf die Achse des Rotors radial von der Achse weg und zur Tangente hin gerichtete Komponente aufweist. Die jeweils zweite Komponente der magnetischen Flussvektoren verläuft parallel zur Tangente.

Die erfindungsgemäße Lösung bewirkt, dass die magnetischen Flusslinien bereits am Übergang zwischen Permanentmagnet und Sammlerelement in einer radialen Richtung zum Außenumfang des Rotors abgelenkt werden. Es stellt sich somit eine Vorzugsrichtung ein, durch die am Außenumfang des Rotors ein stärkeres magnetisches Feld erzeugt werden kann. Daraus resultiert ein stärkeres Drehmoment im Betrieb des Elektromotors.

Die Mittelebene jedes Permanentmagneten stellt vorzugsweise eine Symmetrieebene des betreffenden Permanentmagneten dar. Die zweite Längsseite des Permanentmagneten ist somit vorzugsweise in Bezug auf die Mittelebene symmetrisch zur ersten Längsseite.

Vorteilhafte Ausführungsformen der vorliegenden Erfindung sind Gegenstand der Unteransprüche.

In einer bevorzugten Ausführungsform der vorliegenden Erfindung beträgt der Winkel ϕ zwischen 2.5° und 45°, vorzugsweise zwischen 5° und 25°, und weiter vorzugsweise zwischen 6° und 10°. Dadurch ergibt sich eine besonders vorteilhafte Führung des magnetischen Flusses, was wiederum zu einem optimierten Drehmoment des Elektromotors führt.

Die Permanentmagneten sind in Ausnehmungen eines Rotorkörpers eingesetzt. Dadurch ergibt sich zum einen eine einfache Positionierung und damit auch eine einfache Montage der Permanentmagneten. Diese Ausführungsform stellt insgesamt eine besonders einfache und kostengünstige Bauweise, insbesondere für sehr kompakte Elektromotoren da. Zum anderen können die auf die Permanentmagneten wirkenden Lasten, die im Betrieb des Elektromotors auftreten, bei dieser Ausführungsform vom Rotorkörper aufgenommen werden.

In einer besonders bevorzugten Ausführungsform der vorliegenden Erfindung sind die Ausnehmungen dabei zur Achse des Rotors hin offen, sodass die Permanentmagneten vom Inneren des Rotors nach radial außen in die Ausnehmungen eingesetzt werden können. Diese Ausführungsform hat unter anderem den Vorteil, dass durch einen einfachen Formschluss zwischen dem Rotorkörper und den Permanentmagneten sichergestellt werden kann, dass die auf die Permanentmagneten wirkenden Zentrifugalkräfte in den Rotorkörper eingeleitet und von diesem aufgenommen werden können.

Die Ausnehmungen verjüngen sich vom Inneren des Rotors hin zum Außenumfang des Rotors, wobei sich auch die Permanentmagneten vom Inneren des Rotors hin zum Außenumfang des Rotors verjüngen. Dadurch kann zum einen auf besonders einfache Art und Weise ein Formschluss hergestellt werden, der zu einem sicheren Halt der Permanentmagneten im Rotorkörper führt. Zum anderen wird dadurch auch die Führung des magnetischen Flusses weiter optimiert.Die Permanentmagneten weisen dabei einen trapezförmigen Querschnitt auf. Die erste Längsseite und die zweite Längsseite bilden dabei die beiden schrägen Flächen des Trapezes. Bei einem vorgenannten Bereich des Winkels ϕ, wird der magnetische Fluss bei dem erfindungsgemäßen trapezförmigen Querschnitt der Permanentmagnete orthogonal zur ersten Längsseite und orthogonal zur zweiten Längsseite des Permanentmagneten magnetisiert.

Jeder Permanentmagnet ist aus zwei Magnethälften zusammengesetzt. Die Magnethälften sind in Bezug auf die Mittelebene vorzugsweise symmetrisch zueinander, sodass die Mittelebene den Permanentmagneten in die beiden Magnethälften teilt. Bei dieser Ausführungsform erleichtert sich die Magnetisierung, da die Magnethälften separat und homogen magnetisiert werden können. Die Permanentmagneten sind derart magnetisiert, dass der magnetische Flussvektor sowohl an der ersten Längsseite als auch an der zweiten Längsseite orthogonal zur jeweiligen Längsseite ausgerichtet ist. Bei einer erfindungsgemäßen Ausführungsform mit trapezförmigen Querschnitt des Permanentmagneten und Aufteilung des Permanentmagneten in zwei Magnethälften werden die Magnethälften dabei derart magnetisiert, dass der magnetische Flussvektor innerhalb der Magnethälfte homogen senkrecht zur ersten bzw. zweiten Längsseite verläuft. Der magnetische Flussvektor steht damit auch senkrecht auf die jeweils größte Oberfläche der Magnethälfte bzw. senkrecht auf jeweils eine der beiden größten Oberflächen des Permanentmagneten.

Gemäß einer weiteren besonders bevorzugten Ausführungsform der vorliegenden Erfindung bildet der Rotorkörper einen magnetischen Rotorrückschluss. Er umfasst dabei vorzugsweise mehrere magnetische Sammlerelemente, die jeweils zwischen zwei Permanentmagneten angeordnet sind. Somit befindet sich jeweils ein Sammlerelement zwischen der ersten Längsseite eines ersten Permanentmagneten und der zweiten Längsseite eines benachbarten zweiten Permanentmagneten. Bei den Sammlerelementen handelt es sich vorzugsweise um Blechpakete.

Gemäß einer weiteren Ausführungsform der vorliegenden Erfindung sind die Sammlerelemente am Außenumfang des Rotors jeweils durch einen Steg miteinander verbunden. Dadurch wird ein besonders stabiler struktureller Zusammenhalt der Rotorbaugruppe bei gleichzeitig einfacher Bauweise und Montage gewährleistet. Alle Sammlerelemente des Rotors sind somit miteinander verbunden und bilden eine Einheit. Auch diese Einheit kann beispielsweise durch ein Blechpaket aus aufeinandergestapelten Sammlerblechen gebildet sein. Die Stege weisen vorzugsweise eine in radialer Richtung gemessene Dicke von weniger als 1 mm, vorzugsweise weniger als 0,5 mm, und weiter vorzugsweise weniger als 0,3 mm auf, um den magnetischen Fluss am Außenumfang weiter zu optimieren.

Alternativ können die Sammlerelemente auch nicht durch Stege, sondern auf andere Art und Weise miteinander verbunden sein. Beispielsweise können die Permanentmagneten und die Sammlerelemente miteinander verklebt, vergossen, oder miteinander verschraubt oder vernietet werden. Die einzelnen Bleche eines Blechpakets können beispielsweise durch einen Stift, welcher in Bohrungen in den Blechen eingesetzt wird, zu einem Paket fixiert werden.

Gemäß einer weiteren besonders bevorzugten Ausführungsform der vorliegenden Erfindung besteht auf einer der Achse des Rotors zugewandten dritten Längsseite der Permanentmagneten keine ferromagnetische Verbindung bzw. kein magnetischer Rückschluss zwischen den Sammlerelementen, die an den jeweiligen Permanentmagnet angrenzen. Dadurch wird verhindert, dass der magnetische Fluss am Innenumfang des Rotors durch eine ferromagnetische Verbindung kurzgeschlossen wird und somit ein Teil des magnetischen Flusses nicht zur Drehmomentgenerierung genutzt werden kann. Anstatt einer ferromagnetischen Verbindung kann am Innenumfang eine diamagnetische oder paramagnetische Verbindung zwischen den Sammlerelementen vorhanden sein.

Gemäß einer weiteren besonders bevorzugten Ausführungsform der vorliegenden Erfindung bestehen die Permanentmagneten aus einem anisotropen magnetischen Material. Dies ist vorteilhaft für die Magnetisierung, da die Permanentmagneten mit einer Vorzugsrichtung für die Magnetisierung hergestellt werden können. Weiter vorzugsweise bestehen die Permanentmagnete aus Neodym-Eisen-Bor, Samarium-Cobalt, Alnico, einer Legierung aus den vorgenannten Materialien oder aus einem Hart-Ferrit.

Die Erfindung stellt auch einen Elektromotor mit einem erfindungsgemäßen mehrpoligen Rotor bereit.

Ausführungsbeispiele der vorliegenden Erfindung werden im Folgenden anhand von Zeichnungen näher erläutert.

Es zeigen:
- Figur 1:: einen nicht zur Erfindung gehörenden Elektromotor mit einem Rotor gemäß einem ersten Ausführungsbeispiel im Querschnitt,
- Figur 2:: eine Detailansicht des Rotors des Elektromotors aus Figur 1, ebenfalls im Querschnitt,

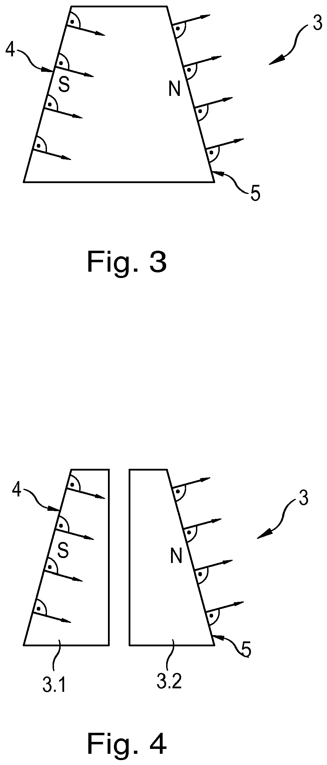

- Figur 3:: einen Permanentmagneten eines nicht zur Erfindung gehörenden Rotors gemäß einem zweiten Ausführungsbeispiel im Querschnitt,
- Figur 4:: einen Permanentmagneten eines erfindungsgemäßen Rotors gemäß einem dritten Ausführungsbeispiel im Querschnitt, bestehend aus zwei Magnethälften,

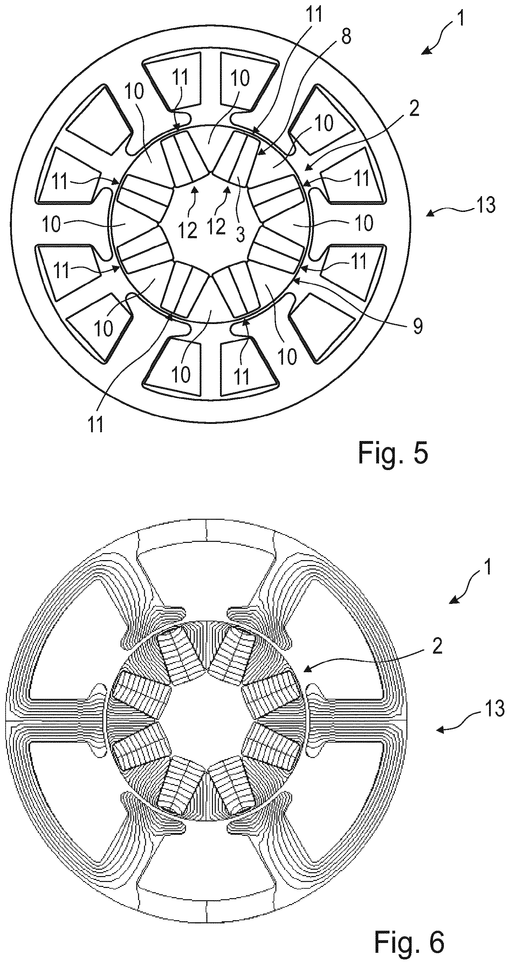

- Figur 5:: einen Elektromotor mit einem erfindungsgemäßen Rotor gemäß dem dritten Ausführungsbeispiel im Querschnitt,
- Figur 6:: die Ansicht aus Figur 5 mit dargestellten magnetischen Flusslinien,

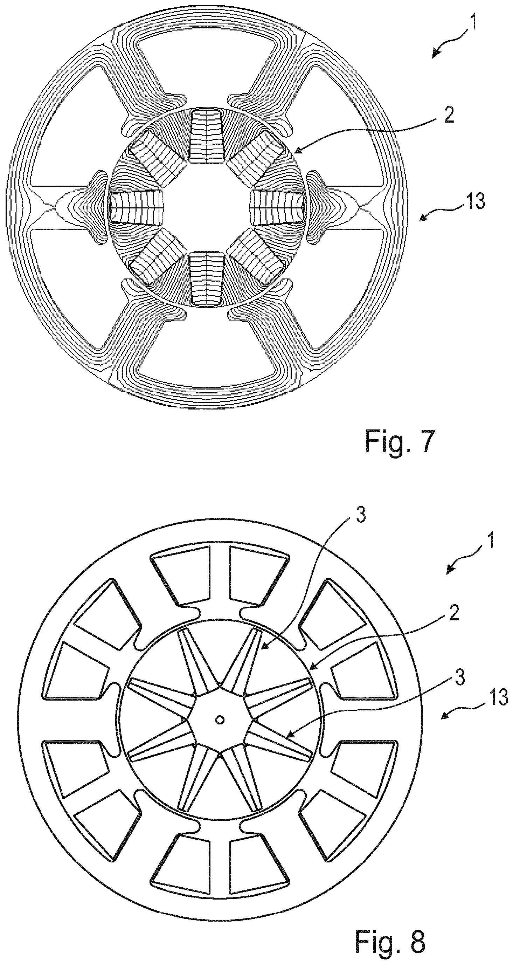

- Figur 7:: die Ansicht aus Figur 6 mit einer anderer Drehposition des Rotors,
- Figur 8.: einen Elektromotor mit einem erfindungsgemäßen Rotor gemäß einem vierten Ausführungsbeispiel im Querschnitt,

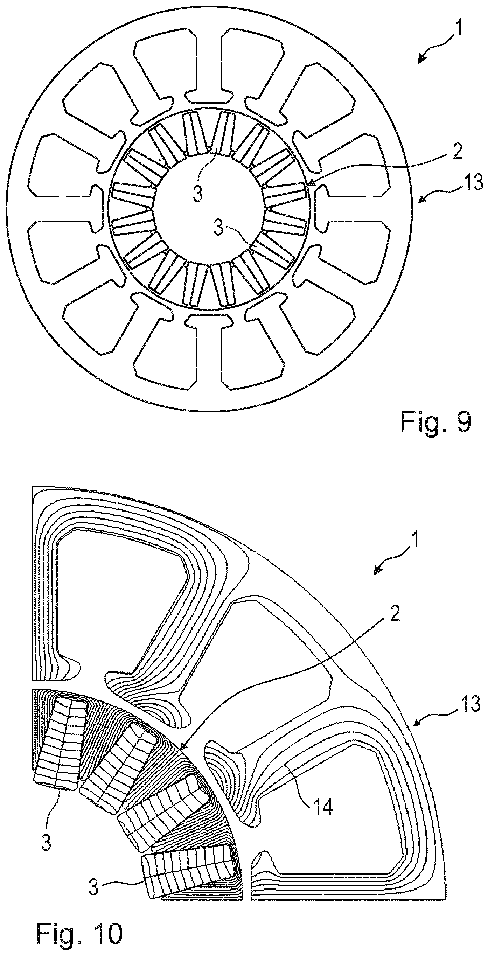

- Figur 9:: einen Elektromotor mit einem erfindungsgemäßen Rotor gemäß einem fünften Ausführungsbeispiel im Querschnitt, und
- Figur 10:: eine Detailansicht der Abbildung aus Figur 9 mit dargestellten magnetischen Flusslinien.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

Figur 1 zeigt einen schematischen Querschnitt durch einen Elektromotor 1 mit einem mehrpoligen Rotor 2 gemäß einem ersten Ausführungsbeispiel. Bei dem Rotor 2 handelt es sich um einen Innenläufer, dessen Achse bzw. Drehachse in der Darstellung mit dem Bezugszeichen 6 versehen ist. Der Elektromotor 1 verfügt über einen außenliegenden Stator 13 bekannter Bauart. Der Stator 13 verfügt über mehrere über den Umfang verteilt angeordnete und radial nach innen stehende Zähne 14, die jeweils mit einer Statorspule 15 bewickelt sind.

Figur 2 zeigt eine Detailansicht des Rotors 2 gemäß dem ersten Ausführungsbeispiel. Der Rotor 2 weist insgesamt acht Permanentmagneten 3 auf, die über den Umfang des Rotors verteilt angeordnet sind. Jeder Permanentmagnet weist eine erste Längsseite 4 und eine der ersten Längsseite gegenüberliegende zweite Längsseite 5 auf. Erste und zweite Längsseite sind jeweils einem benachbarten Permanentmagnet zugewandt. Zwischen erster Längsseite 4 und zweiter Längsseite 5 besteht eine in Bezug auf die Achse 6 des Rotors radial verlaufende Mittelebene 7 des jeweiligen Permanentmagneten. Erste Längsseite 4, zweite Längsseite 5 und Mittelebene 7 verlaufen somit parallel zur Achse 6 des mehrpoligen Rotors 2. Jeweils einer der beiden magnetischen Pole eines jeden Permanentmagneten befindet sich an dessen erster Längsseite 4 und an dessen zweiter Längsseite 5. Der Rotor 2 verfügt über einen Rotorrückschluss, welcher mehrere magnetische Sammlerelemente 10 umfasst, die jeweils zwischen zwei der Permanentmagneten 3 angeordnet sind.

Die Permanentmagneten 3 sind derart magnetisiert, dass zwischen sowohl einem in den Permanentmagnet eintretenden magnetischen Flussvektor an der ersten Längsseite 4 als auch einem aus dem Permanentmagnet austretenden magnetischen Flussvektor an der zweiten Längsseite 5 einerseits und einer orthogonal zur Mittelebene 7 des Permanentmagneten 3 verlaufenden Tangente 16 am Außenumfang des Rotors andererseits ein Winkel ϕ größer 0° besteht. Der Winkel ϕ beträgt beim gezeigten Ausführungsbeispiel etwa 15°. Wie die Abbildung in Figur 2 zeigt, weist der in den Permanentmagnet eintretende magnetische Flussvektor an der ersten Längsseite 4 eine radial zur Achse 6 hin und von der Tangente 16 weg gerichtete Komponente auf, wobei der aus dem Permanentmagnet austretende magnetische Flussvektor an der zweiten Längsseite 5 eine radial von der Achse 6 weg und zur Tangente 16 hin gerichtete Komponente aufweist. Die jeweils zweite Komponente der beiden magnetischen Flussvektoren verläuft parallel zur Tangente 16.

Durch diese Magnetisierung wird erreicht, dass die magnetischen Flusslinien bereits am Übergang zwischen Permanentmagnet 3 und Sammlerelement 10 in einer radialen Richtung zum Außenumfang des Rotors 2 abgelenkt werden. Es stellt sich somit eine Vorzugsrichtung ein, durch die am Außenumfang des Rotors 2 ein stärkeres magnetisches Feld erzeugt werden kann. Daraus resultiert ein stärkeres Drehmoment im Betrieb des Elektromotors.

Die Wirkung wird noch unterstützt, wenn die Permanentmagneten, wie in Figur 3 gezeigt, einen trapezförmigen Querschnitt haben. Das dünnere Ende der Trapezform befindet sich dabei am Außenumfang des Rotors, die dickere Basis am Innenumfang des Rotors.

Figur 4 zeigt eine Abwandlung des Permanentmagneten aus Figur 3, bei welcher der Permanentmagnet 3 aus zwei Magnethälften 3.1 und 3.2 zusammengesetzt ist. Bei dieser Ausführungsform wird die Magnetisierung dadurch vereinfacht, dass jede der beiden Magnethälften 3.1 und 3.2 separat hergestellt und magnetisiert werden kann. Die Magnetisierung erfolgt vorzugsweise so, dass die Magnetisierungsrichtung in der gesamten Magnethälfte homogen ist und senkrecht zur jeweiligen Längsseite 4 bzw. 5 verläuft.

Figur 5 zeigt einen Querschnitt durch einen Elektromotor mit einem erfindungsgemäßen Rotor 2 gemäß einem weiteren Ausführungsbeispiel. Im Unterschied zu dem Ausführungsbeispiel aus Figur 1 kommen bei diesem Ausführungsbeispiel geteilte Permanentmagnete 3 gemäß Figur 4 zum Einsatz. Ein weiterer Unterschied besteht in Bezug auf den Rotorrückschluss. Bei diesem Ausführungsbeispiel sind die zwischen den Permanentmagneten 3 angeordneten magnetischen Sammlerelemente 10 am Außenumfang des Rotors 2 durch Stege 11 miteinander verbunden. Die Sammlerelemente 10 bilden demnach eine Einheit, die einen Rotorkörper 9 des Rotors 2 darstellt. Der Rotorkörper 9 weist daher jeweils zwischen zwei Sammlerelementen 10 eine Ausnehmung 8 für einen der Permanentmagneten 3 auf. Die Permanentmagneten 3 bzw. deren Hälften 3.1 und 3.2 können vom Inneren des Rotors nach radial außen in die Ausnehmungen 8 eingesetzt werden. Auf einer der Achse 6 des Rotors zugewandten Längsseite 12 eines jeden Permanentmagneten 3 besteht keine ferromagnetische Verbindung bzw. kein magnetischer Rückschluss zwischen den Sammlerelementen 10, was zu einer weiteren Optimierung des Drehmoments beiträgt.

Figur 6 zeigt den Querschnitt aus Figur 5 mit dargestellten magnetischen Flusslinien. Die Statorspulen sind in dieser Darstellung nicht gezeigt.

Figur 7 zeigt wiederum den Querschnitt aus Figur 5 mit dargestellten magnetischen Flusslinien, wobei der Rotor in dieser Darstellung eine andere Drehposition hat.

Figur 8 zeigt ein weiteres Ausführungsbeispiel ähnlich dem Ausführungsbeispiel aus Figur 5. Der Unterschied zum Ausführungsbeispiel aus Figur 5 besteht darin, dass die Permanentmagneten 3 trotz trapezförmigem Querschnitt etwas schmaler und länger (in radialer Richtung) sind.

Figur 9 zeigt ein weiteres Ausführungsbeispiel, bei dem im Unterschied zum Ausführungsbeispiel aus Figur 5 doppelt so viele Permanentmagneten über den Umfang des Rotors verteilt angeordnet sind. Figur 10 zeigt eine Detailansicht des Rotors aus Figur 9 mit dargestellten magnetischen Flusslinien.

In Ausführungsbeispielen kann der magnetische Flussvektor an der ersten Längsseite 4 oder der zweiten Längsseite 5 des Permanentmagneten 3 eintreten. Der magnetische Flussvektor kann aber auch an der ersten Längsseite 4 oder zweiten Längsseite 5 des Permanentmagneten 3 austreten. Benachbarte Permanentmagnete 3 weisen dabei gegeneinander jeweils gleiche Pole auf. Somit sind benachbarte Permanentmagnete 3 einander gegenüberliegend gleich polarisiert.

In Ausführungsbeispielen mit Permanentmagneten 3 mit trapezförmigem Querschnitt tritt der magnetische Flussvektor rechtwinklig bzw. orthogonal aus der ersten Längsseite 4 oder der zweiten Längsseite 5 aus oder ein. Bei trapezförmigem Querschnitt des Permanentmagneten 3 mit orthogonal zur ersten Längsseite 4 oder zweiten Längsseite 5 eintretendem oder austretendem magnetischen Flussvektor kann der Winkel ϕ einem der vorgenannten Bereichen entsprechen. Der Winkel ϕ entspricht dabei auch dem Winkel der ersten Längsseite 4 oder der zweiten Längsseite 5 des Permanentmagneten 3 gegenüber der radial verlaufenden Mittelebene 7 des jeweiligen Permanentmagneten 3. Dadurch wird der trapezförmige Permanentmagnet 3 orthogonal zu der ersten ängsseite 4 oder zweiten Längsseite 4 magnetisiert.

Das in dem vorgenannten Absatz für Permanentmagnete 3 mit trapezförmigem Querschnittbeschriebene ist auch auf Permanentmagnete, welche aus zwei Magnethälften 3.1 und 3.2 zusammengesetzt sind anwendbar. Dabei können die beiden Magnethälften des aus zwei Magnethälften 3.1 und 3.2 zusammengesetzten Permanentmagneten 3 mit trapezförmigen Querschnitt, auf einfache Weise derart magnetisiert werden, dass der magnetische Flussvektor orthogonal zu der ersten Längsseite 4 und orthogonal zu der zweiten Längsseite 5 des Permanentmagneten 3 austritt bzw. eintritt.

## Patentansprüche

1. Mehrpoliger Rotor (2) für einen Elektromotor (1), mit einem Rotorkörper (9) und mehreren Permanentmagneten (3), die über einen Umfang des Rotors verteilt angeordnet sind, wobei jeder Permanentmagnet (3) eine erste Längsseite (4) und eine der ersten Längsseite gegenüberliegende zweite Längsseite (5) aufweist, wobei erste und zweite Längsseite jeweils einem benachbarten Permanentmagnet zugewandt sind, wobei zwischen erster und zweiter Längsseite eine in Bezug auf eine Achse (6) des Rotors radial verlaufende Mittelebene (7) des jeweiligen Permanentmagneten besteht, und wobei sich an der ersten Längsseite und an der zweiten Längsseite jeweils einer der beiden magnetischen Pole des Permanentmagneten befindet, wobei der Permanentmagnet (3) derart magnetisiert ist, dass zwischen sowohl einem in den Permanentmagnet eintretenden magnetischen Flussvektor an der ersten Längsseite (4) als auch einem aus dem Permanentmagnet austretenden magnetischen Flussvektor an der zweiten Längsseite (5) einerseits und einer orthogonal zur Mittelebene (7) des Permanentmagneten verlaufenden Tangente (16) am Außenumfang des Rotors andererseits ein Winkel ϕ größer 0° besteht, wobei der in den Permanentmagnet eintretende magnetische Flussvektor an der ersten Längsseite (4) eine in Bezug auf die Achse (6) des Rotors radial zur Achse hin und von der Tangente (16) weg gerichtete Komponente aufweist, und wobei der aus dem Permanentmagnet austretende magnetische Flussvektor an der zweiten Längsseite (5) eine in Bezug auf die Achse (6) des Rotors radial von der Achse weg und zur Tangente (16) hin gerichtete Komponente aufweist, wobei die Permanentmagnete (3) in Ausnehmungen (8) des Rotorkörpers (9) eingesetzt sind und sich die Ausnehmungen (8) vom Inneren des Rotors (2) zum Außenumfang des Rotors (2) hin verjüngen, wobei sich auch die Permanentmagneten (3) vom Inneren des Rotors (2) hin zum Außenumfang des Rotors (2) verjüngen, wobei die Permanentmagneten (3) einen trapezförmigen Querschnitt aufweisen, die Permanentmagneten (3) derart magnetisiert sind, dass der magnetische Flussvektor sowohl an der ersten Längsseite (4) als auch an der zweiten Längsseite (5) orthogonal zur jeweiligen Längsseite ausgerichtet ist, **dadurch gekennzeichnet, dass** jeder Permanentmagnet (3) aus zwei Magnethälften (3.1, 3.2) zusammengesetzt ist.

2. Mehrpoliger Rotor (2) nach Anspruch 1, **dadurch gekennzeichnet, dass** der Winkel ϕ zwischen 2.5° und 45°, vorzugsweise zwischen 5° und 25°, und weiter vorzugsweise zwischen 6° und 10° beträgt.

3. Mehrpoliger Rotor (2) nach Anspruch 1, **dadurch gekennzeichnet, dass** die Ausnehmungen (8) zur Achse (6) des Rotors (2) hin offen sind, so dass die Permanentmagnete (3) vom Inneren des Rotors (2) nach radial außen in die Ausnehmungen (8) eingesetzt werden können.

4. Mehrpoliger Rotor (2) nach einem der Ansprüche 1 bis 3, **dadurch gekennzeichnet, dass** der Rotorkörper (9) einen magnetischen Rotorrückschluss bildet.

5. Mehrpoliger Rotor (2) nach Anspruch 4, **dadurch gekennzeichnet, dass** der Rotorrückschluss mehrere magnetische Sammlerelemente (10) umfasst, die jeweils zwischen zwei Permanentmagneten (3) angeordnet sind.

6. Mehrpoliger Rotor (2) nach Anspruch 5, **dadurch gekennzeichnet, dass** die Sammlerelemente (10) am Außenumfang des Rotors (2) jeweils durch einen Steg (11) miteinander verbunden sind.

7. Mehrpoliger Rotor (2) nach Anspruch 6, **dadurch gekennzeichnet, dass** die Stege (11) eine in radialer Richtung gemessene Dicke von weniger als 1 mm, vorzugsweise weniger als 0,5 mm, und weiter vorzugsweise weniger als 0,3 mm aufweisen.

8. Mehrpoliger Rotor (2) nach einem der Ansprüche 5 bis 7, **dadurch gekennzeichnet, dass** auf einer der Achse (6) des Rotors (2) zugewandten dritten Längsseite (12) der Permanentmagneten (3) keine ferromagnetische Verbindung bzw. kein magnetischer Rückschluss zwischen den Sammlerelementen (10) besteht, die an den jeweiligen Permanentmagnet (3) angrenzen.

9. Mehrpoliger Rotor (2) nach einem der Ansprüche 1 bis 8, **dadurch gekennzeichnet, dass** die Permanentmagnete (3) aus einem anisotropen magnetischen Material bestehen.

10. Mehrpoliger Rotor (2) nach einem der Ansprüche 1 bis 9, **dadurch gekennzeichnet, dass** die Permanentmagnete (3) aus Neodym-Eisen-Bor, Samarium-Cobalt, Alnico, einer Legierung aus den vorgenannten Materialien oder aus einem Hart-Ferrit bestehen.

11. Elektromotor (1) mit einem mehrpoligen Rotor (2) gemäß einem der Ansprüche 1 bis 10.

## Claims

1. Multipolar rotor (2) for an electric motor (1), with a rotor body (9) and several permanent magnets (3) distributed over a circumference of the rotor, each permanent magnet (3) having a first longitudinal side (4) and a second longitudinal side (5) opposite the first longitudinal side, the first and second longitudinal sides each facing an adjacent permanent magnet, wherein between the first and second longitudinal sides there is a central plane (7) of the respective permanent magnet extending radially with respect to an axis (6) of the rotor, and wherein one of the two magnetic poles of the permanent magnet is located on the first longitudinal side and one of the two magnetic poles of the permanent magnet is located on the second longitudinal side, the permanent magnet (3) being magnetised in this way, in that there is an angle Φ greater than 0° between both a magnetic flux vector entering the permanent magnet on the first longitudinal side (4) and a magnetic flux vector exiting the permanent magnet on the second longitudinal side (5) on the one hand and a tangent (16) running orthogonally to the centre plane (7) of the permanent magnet on the outer circumference of the rotor on the other hand, wherein the magnetic flux vector entering the permanent magnet has, on the first longitudinal side (4), a component directed radially towards the axis (6) of the rotor and away from the tangent (16) with respect to the axis, and wherein the magnetic flux vector emerging from the permanent magnet has on the second longitudinal side (5) a component directed radially away from the axis (6) of the rotor with respect to the axis and towards the tangent (16), wherein the permanent magnets (3) are inserted in recesses (8) of the rotor body (9) and the recesses (8) taper from the interior of the rotor (2) towards the outer circumference of the rotor (2), the permanent magnets (3) also taper from the interior of the rotor (2) towards the outer circumference of the rotor (2), the permanent magnets (3) having a trapezoidal cross-section, the permanent magnets (3) are magnetized in such a way that the magnetic flux vector on both the first longitudinal side (4) and the second longitudinal side (5) is oriented orthogonally to the respective longitudinal side, **characterised in that** each permanent magnet (3) consists of two magnet halves (3.1, 3.2).

2. The multipolar rotor (2) according to claim 1, **characterised in that** the angle Φ is between 2.5° and 45°, preferably between 5° and 25°, and further preferably between 6° and 10°.

3. The multipolar rotor (2) according to claim 1, **characterised in that** the recesses (8) are open towards the axis (6) of the rotor (2) so that the permanent magnets (3) can be inserted into the recesses (8) from the inside of the rotor (2) radially outwards.

4. The multipolar rotor (2) according to one of claims 1 to 3, **characterised in that** the rotor body (9) forms a magnetic rotor return.

5. The multipolar rotor (2) according to claim 4, **characterised in that** the rotor return comprises several magnetic collector elements (10), each of which is arranged between two permanent magnets (3).

6. The multipolar rotor (2) according to claim 5, **characterised in that** the collector elements (10) on the outer circumference of the rotor (2) are each connected to one another by a web (11).

7. The multipolar rotor (2) according to claim 6, **characterised in that** the webs (11) have a thickness, measured in the radial direction, of less than 1 mm, preferably less than 0.5 mm, and more preferably less than 0.3 mm.

8. The multipolar rotor (2) according to one of claims 5 to 7, **characterised in that** on a third longitudinal side (12) of the permanent magnets (3) facing the axis (6) of the rotor (2) there is no ferromagnetic connection or magnetic return between the collector elements (10) adjacent to the respective permanent magnet (3).

9. The multipolar rotor (2) according to one of claims 1 to 8, **characterised in that** the permanent magnets (3) are made of an anisotropic magnetic material.

10. The multipolar rotor (2) according to any one of claims 1 to 9, **characterised in that** the permanent magnets (3) consist of neodymium-iron-boron, samarium-cobalt, alnico, an alloy of the aforementioned materials or of a hard ferrite.

11. An electric motor (1) with a multipolar rotor (2) according to one of the claims 1 to 10.

## Revendications

1. Rotor multipolaire (2) pour un moteur électrique (1), avec un corps de rotor (9) et plusieurs aimants permanents (3) répartis sur une circonférence du rotor, chaque aimant permanent (3) présentant un premier côté longitudinal (4) et un deuxième côté longitudinal (5) opposé au premier côté longitudinal, les premier et deuxième côtés longitudinaux étant chacun tournés vers un aimant permanent adjacent, **caractérisé en ce qu'**entre les premier et deuxième côtés longitudinaux se trouve un plan central (7) de l'aimant permanent respectif s'étendant radialement par rapport à un axe (6) du rotor, et dans lequel l'un des deux pôles magnétiques de l'aimant permanent est situé sur le premier côté longitudinal et l'un des deux pôles magnétiques de l'aimant permanent est situé sur le deuxième côté longitudinal, l'aimant permanent (3) étant magnétisé de cette manière, **en ce qu'**il existe un angle Φ supérieur à 0° entre, d'une part, un vecteur de flux magnétique entrant dans l'aimant permanent sur le premier côté longitudinal (4) et un vecteur de flux magnétique sortant de l'aimant permanent sur le deuxième côté longitudinal (5) et, d'autre part, une tangente (16) s'étendant orthogonalement au plan central (7) de l'aimant permanent sur la circonférence extérieure du rotor, dans lequel le vecteur de flux magnétique entrant dans l'aimant permanent présente, sur le premier côté longitudinal (4), une composante dirigée radialement vers l'axe (6) du rotor et s'éloignant de la tangente (16) par rapport à l'axe, et dans lequel le vecteur de flux magnétique sortant de l'aimant permanent présente sur le deuxième côté longitudinal (5) une composante dirigée radialement à l'opposé de l'axe (6) du rotor par rapport à l'axe et vers la tangente (16), dans lequel les aimants permanents (3) sont insérés dans des évidements (8) du corps de rotor (9) et les évidements (8) se rétrécissent de l'intérieur du rotor (2) vers la circonférence extérieure du rotor (2), les aimants permanents (3) se rétrécissent également de l'intérieur du rotor (2) vers la circonférence extérieure du rotor (2), les aimants permanents (3) ayant une section transversale trapézoïdale, les aimants permanents (3) sont magnétisés de telle manière que le vecteur de flux magnétique sur le premier côté longitudinal (4) et le deuxième côté longitudinal (5) est orienté orthogonalement au côté longitudinal respectif, **caractérisé en ce que** chaque aimant permanent (3) est constitué de deux moitiés d'aimant (3).1, 3.2).

2. Rotor multipolaire (2) selon la revendication 1, **caractérisé en ce que** l'angle Φ est compris entre 2,5° et 45°, de préférence entre 5° et 25°, et en outre de préférence entre 6° et 10°.

3. Rotor multipolaire (2) selon la revendication 1, **caractérisé en ce que** les évidements (8) sont ouverts vers l'axe (6) du rotor (2) de sorte que les aimants permanents (3) peuvent être insérés dans les évidements (8) de l'intérieur du rotor (2) radialement vers l'extérieur.

4. Rotor multipolaire (2) selon l'une des revendications 1 à 3, **caractérisé en ce que** le corps du rotor (9) forme un retour magnétique du rotor.

5. Rotor multipolaire (2) selon la revendication 4, **caractérisé en ce que** le retour du rotor comprend plusieurs éléments collecteurs magnétiques (10), dont chacun est disposé entre deux aimants permanents (3).

6. Rotor multipolaire (2) selon la revendication 5, **caractérisé en ce que** les éléments collecteurs (10) sur la circonférence extérieure du rotor (2) sont chacun reliés entre eux par une barrette (11).

7. Rotor multipolaire (2) selon la revendication 6, **caractérisé en ce que** les barrettes (11) ont une épaisseur, mesurée dans la direction radiale, inférieure à 1 mm, de préférence inférieure à 0,5 mm, et plus préférablement inférieure à 0,3 mm.

8. Rotor multipolaire (2) selon l'une des revendications 5 à 7, **caractérisé en ce que** sur un troisième côté longitudinal (12) des aimants permanents (3), tourné vers l'axe (6) du rotor (2), il n'y a pas de liaison ferromagnétique ni de retour magnétique entre les éléments collecteurs (10) voisins de l'aimant permanent (3) respectif.

9. Rotor multipolaire (2) selon l'une des revendications 1 à 8, **caractérisé en ce que** les aimants permanents (3) sont constitués d'un matériau magnétique anisotrope.

10. Rotor multipolaire (2) selon l'une des revendications 1 à 9, **caractérisé en ce que** les aimants permanents (3) sont constitués de néodyme-fer-bore, de samarium-cobalt, d'alnico, d'un alliage des matériaux précités ou d'une ferrite dure.

11. Moteur électrique (1) avec un rotor multipolaire (2) selon l'une des revendications 1 à 10.
